(19) Europäisches Patentamt
European Patent Office
Office européen des brevets

(11) **EP 2 559 979 A2**

(12) **EUROPEAN PATENT APPLICATION**

(43) Date of publication:
**20.02.2013 Bulletin 2013/08**

(51) Int Cl.:
***G01H 1/00*** (2006.01)

(21) Application number: **12179864.9**

(22) Date of filing: **09.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.08.2011 DE 102011110215**
**19.07.2012 DE 102012014277**

(71) Applicant: **Prüftechnik Dieter Busch AG**
**85737 Ismaning (DE)**

(72) Inventors:
• **Kuchler, Alexander**
**85716 Unterschleissheim (DE)**
• **Krach, Karl**
**81675 München (DE)**
• **Busch, Dieter**
**85737 Ismaning (DE)**

(54) **Device and method for detecting machine vibrations**

(57)     The invention relates to a device for detecting vibrations on a machine (12) with at least one machine element (11) which rotates around one axis of rotation, with one measurement head (1) for detachable coupling to at least one measuring point (13, 61, 62, 63) of the machine, with a sensor arrangement (2) for measuring vibrations in at least one sensor measurement direction which is stationary with respect to the measurement head, and an arrangement (42, 43, 44, 45) for detecting the current three-dimensional orientation of the sensor measurement direction, with at least one gyroscope (42, 43, 44), and an arrangement (46) for assignment of vibration measurement and the corresponding orientation of the sensor measurement direction during the respective vibration measurement.

Fig. 1

Printed by Jouve, 75001 PARIS (FR)

EP 2 559 979 A2

**Description**

Technical Field

The invention relates to a device for detecting vibrations on a machine which is stationary in space with at least one machine element which rotates around one axis of rotation, with a measurement head for detachable coupling to a measuring point on the machine with a sensor arrangement for measuring vibrations in at least one sensor measurement direction which is stationary with respect to the measurement head.

Background Art

These devices are typically made as portable hand-held devices and are also called data collectors, the indicated vibration data being conventionally used for condition monitoring of the machine in order for example to detect emerging bearing damage early and in this way to avoid damage to the machine. Typically, on one machine there are several measuring points on which measurements are to be taken in sequence. Furthermore the data collector is conventionally used for measuring vibrations on several machines. In the practical operation of the data collector it is especially important that the respective vibration measurement data are correctly assigned to the corresponding measuring points in the evaluation since otherwise an incorrect evaluation can be made which can possibly entail subsequent damage to the affected machine.

One example of a data collector can be found in EP 0 999 433 A2, the data collector being able to automatically recognize the respective measuring point wirelessly or via wire in order to assign the respective measurement accordingly (these examples are described for example in EP 0 656 138 A1 and EP 0 211 212 A2). The data collector can support the user in the respective choice of the correct measuring point by graphic and/or acoustic information.

EP 2 320 203 A1 describes a vibration measuring device which is provided with an integrated inclinometer function in order to determine the orientation of the vibration sensor in the measuring point with respect to the force of gravity and to make it available for interpretation/evaluation of the vibration measurement. Here the vibration sensor can be made as an accelerometer, and the accelerometer/inclinometer function can be implemented in the form of a MEMS module; the module can be made such that a two-dimensional or three-dimensional inclinometer function and two- or three-dimensional vibration measurements are enabled. A similar vibration measuring device is described in EP 2 320 204 A2.

US 7,093,492 B2 describes a vibration sensor in which gyroscopes can be used as vibration-detecting elements and there can be several sensor circuits which each have one vibration-detecting element in order to be able to measure vibrations in two or three orthogonal Cartesian directions, in this connection the use of two or three analogous accelerometers being mentioned.

DE 10 2007 010 800 A1 discloses a device for determining the vibration loading of an individual, the device being made as a dosimeter which is attached to a device used by the individual or on the arm of the individual and has a measuring sensor for determining the daily vibration total of the device used. The measuring sensor comprises an acceleration sensor arrangement which has an acceleration sensor and a gyroscope for each direction of space.

Summary of invention

The object of this invention is to devise a device for detecting vibrations on at least one measuring point of a machine which is stationary in space, and in which assignment of the vibration measurement to the respective measuring point which is as simple and reliable as possible is achieved. Furthermore a corresponding method will be devised.

This object is achieved as claimed in the invention by a device as claimed in Claim 1 and a method as claimed in Claim 24.

In the approach as claimed in the invention it is advantageous that because there are an arrangement for detecting the current three-dimensional orientation of the sensor measurement direction with at least one in the gyroscope and an arrangement for assignment of vibration measurement and the detected orientation of the sensor measurement direction during the respective vibration measurement, the direction of the respective vibration measurement (for example "horizontally radial", "horizontally axial" and "vertically radial") can be automatically recognized and a corresponding assignment can be undertaken.

In particular, by this automatic recognition of the vibration measurement direction the assignment to the individual measuring points or group of measuring points can take place without individual measuring point identification if the measuring points differ by the intended orientation of the vibration measurement direction, its being sufficient if only one measuring point identification is intended altogether for the group of measuring points. While for example in the vibration measuring device described in EP 2 320 203 A1 with the inclinometer, only recognition of the orientation with respect to the horizontal is possible, the exact three-dimensional orientation of the sensor measurement direction can be determined by providing at least one gyroscope as claimed in this invention.

If the sensor arrangement is made solely for measuring vibrations in a single sensor measurement direction, it is sufficient to establish only the current, three-dimensional orientation of this sensor measurement direction, while the angle of rotation which the measurement head assumes with respect to this sensor measurement direction is insignificant in this case and need not be detected. Here it is sufficient if the measurement head has two gyroscopes or one gyroscope and one inclinometer, and the measurement axes should each be perpendicular to one another and perpendicular to the sensor measurement direction. In order to increase the accuracy of the orientation measurement and to implement a certain redundancy, there can also be inclinometers in addition to the gyroscopes, for example two gyroscopes and two inclinometers.

If the sensor arrangement is made for measuring the vibrations in more than one sensor measurement direction, it is necessary to determine the complete three-dimensional orientation of the measurement head, i.e. in comparison to the above described case the angle of rotation of the measurement head around the axis of the sensor measurement direction must be determined in addition. In this case therefore complete three-axis detection of the three-dimensional orientation of the measurement head is necessary, while in the above described case a two-axle determination of the three-dimensional orientation of the measurement head is sufficient. A three-axle determination of orientation can be done for example by providing three gyroscopes with measurement directions which are perpendicular to one another by two inclinometers and one gyroscope or by two gyroscopes and one inclinometer, and the respective measurement directions should be perpendicular to one another. But here over determination can also take place to increase the accuracy or for reasons of redundancy by for example there being a single-axle or multiaxle inclinometer in addition to three gyroscopes.

Preferably the gyroscope or each gyroscope is a mechanical gyroscope, especially a MEMS gyroscope, although fundamentally gyroscopes based on ring lasers or fiber-optic gyroscopes are suitable.

In a further embodiment of the invention the automatic recognition of the direction of vibration measurement can be used not only for the recognition of the measurement point but also for the correction of measurement data which have been obtained in the case of a measurement head which has been put at the measurement point incorrectly.

Other preferred configurations of the invention will become apparent from the dependent claims.

Brief description of drawings

The invention is detailed below using the attached drawings by way of example:

Figure 1 shows a perspective view of a vibration measuring device as claimed in the invention when positioned on one measuring point on a machine;

Figure 2 shows a perspective view of the measurement head of the vibration measuring device from Figure 1, its being shown partially cutaway;

Figure 3 shows a schematic view of a machine with a measuring point group;

Figure 4 shows a schematic representation of the coordinate transformation which is to be used in a correction of measurement data with respect to a misalignment of the sensor.

Description of embodiments

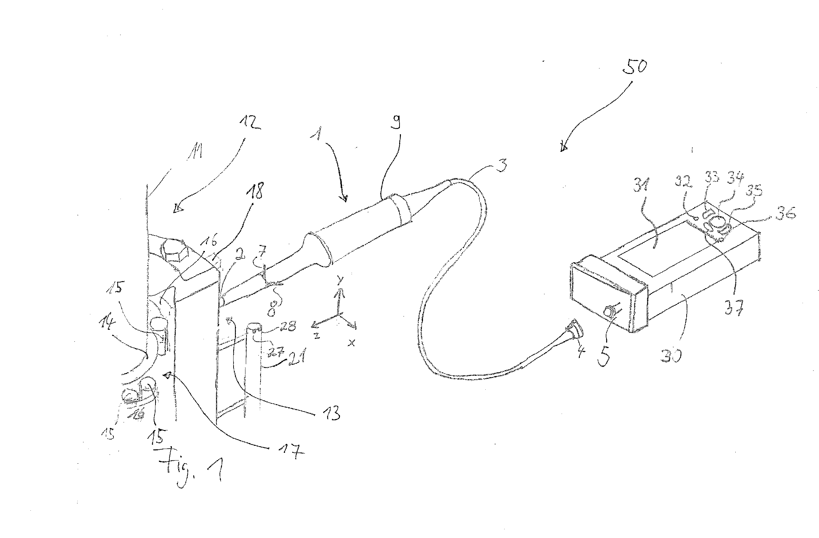

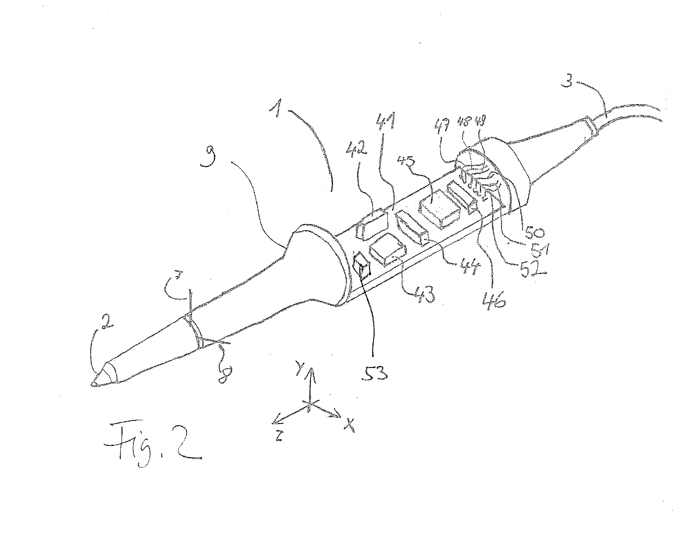

Figures 1 and 2 show one example for a vibration measuring device as claimed in the invention (hereinafter called "data collector 50") which has a measurement head 1 which is made as a touch probe and a hand-held device 30, the measurement head 1 in the illustrated example being connected by means of a cable and connectors 4 and 5 to the hand-held device 30. However it goes without saying that the measurement head 1 could fundamentally also be wirelessly tied to the hand-held device or could be integrated into the hand-held device. In the latter case the hand-held device can be made especially in the manner of a USB stick or an MP3 player.

The hand-held device 30 is used as data evaluation computer and user interface. For this purpose the hand-held device 30 has a display 31 and several control elements 32, 33, 34, 35, 36, and 37. Furthermore it is also used as a power supply for the measurement head 1. For wireless connection between the measurement head and hand-held device the measurement head is provided with its own power supply, typically in the form of a battery. In particular an energy harvester can also be used.

The measurement head 1 on its tip has a vibration sensor 2 for detachable coupling to a measuring point 13 on a machine 12 in order to detect vibrations in at least one sensor measurement direction which is stationary with respect to the measurement head 1, as well as two orientation pins 7 and 8 which are used to engage an orientation-reference arrangement provided on the measuring point 13 such that the measurement head 1 comes to rest in a given orientation at the measuring point 13. In the illustrated example this orientation-reference arrangement is formed by a pipe 21 which is attached to the machine 12 and which is provided with two slots 27 and 28 which are perpendicular to one another and which the orientation pins 7 and 8 of the measurement head 1 can engage in order to establish the position of the measurement head 1 in the orientation measurement, the measurement head 1 being inserted into the pipe 21 (as is explained below, the position of the measurement head assumed in the orientation measurement need not necessarily agree with the position assumed in the vibration measurement). The orientation pins 7 and 8 project preferably perpendicular to one another in the radial direction away from the housing 9 of the measurement head 1 in the radial direction in order to fix the orientation of the measurement head 1 in two directions of space (fixing in the third direction takes place by inserting the measurement head into the pipe 21). It goes without saying that this objective can also be achieved by means of mechanical elements which are configured differently on the measurement head or machine.

The vibration sensor 2 can be made for example as a one-, two- or three-axle accelerometer.

The machine 12 is a machine which is stationary in space with at least one machine element which rotates around one axis of rotation, for example a shaft 11, which is supported in one bearing 17 near the measuring point 13 (in Figure 1 individual bearing components such as the inner ring 14, the roll body 15 and outside ring 16 are indicated).

The measurement head 1 furthermore has means for detecting the current three-dimensional orientation of the measurement direction of the vibration sensor 2. These means can be made such that they can detect not only the current three-dimensional orientation of the sensor measurement direction, but in addition also the current three-dimensional orientation of the measurement head 1 (and thus of the vibration sensor 2). In the former case the three-dimensional orientation of the measurement head 1 is determined only in two directions of space, while in the latter case it is determined in all three directions of space. The former is sufficient for the case in which the vibration sensor 2 measures only in one direction (for example, in the direction along the axial direction of the measurement head 1); if the vibration sensor 2 can measure in several directions of space, this is not sufficient, but rather the orientation of the vibration sensor 2 must be determined in all three directions of space. In both cases these orientation determination means have at least one gyroscope, the orientation being measured in the second and optionally third direction of space by additional elements, such as for example other gyroscopes and/or inclinometers or inclinometer axles.

In the example shown in Figure 2 there are three gyroscopes 42, 43, 44 and another orientation sensor 45, the gyroscope 42 being able to detect rotations around the x-direction, the gyroscope 43 able to detect rotations around the y-direction, and the gyroscope 44 able to detect rotations around the z-direction. The orientation sensor 45 can be made to measure in one, two or three dimensions or directions. Preferably it is a single-axle or multiaxle inclinometer. The orientation sensors 42, 43, 44, 45 are located on a board 41 together with a processor 46 which uses the output signals of the sensors in order to determine the three-dimensional orientation of the measurement head 1. Furthermore Figure 2 shows some signal lines 47, 48, 49, 50 for transmission of signals between the measurement head 1 and the hand-held device 30 as well as supply lines 51, 52 for the measurement head 1.

The inclinometers and gyroscopes need not be located individually on the board for each direction. They can also be present in fewer than six modules, for example one or two. One, several, or even all inclinometers/gyroscopes could fundamentally also be integrated forward into the sensor module 2 with the accelerometer(s).

By means of the orientation sensors the three-dimensional orientation of the measurement head 1 - and thus of the vibration sensor 2 - can be detected during the vibration measurement by means of the vibration sensor 2, the data collector 50 being made such that the detected orientation is assigned to the respective vibration measurement (for example, by means of the processor 46 or by means of a corresponding processor in the hand-held device 30). This information with respect to the orientation of the measurement head during the vibration measurement can be used in the recognition of the measuring point and/or in the evaluation or assessment of the vibration measurements.

It goes without saying that the gyroscopes determine the current angle of rotation around the respective orientation measurement axis in relative terms with respect to a previously given reference. For this purpose corresponding calibration of the gyroscope can take place in that the measurement head 1 is moved into a given reference position (in the illustrated example by inserting the measurement head 1 into the pipe 21) and this reference position is fixed as the reference by corresponding actuation of the control panel of the data collector 50. In this connection the position of the measurement head assumed in the orientation measurement need not necessarily agree with the position assumed in the vibration measurement; rather the orientation measurement in the reference position can be used as described for calibration of the gyroscopes which then determine the orientation in vibration measurement proceeding from the reference position.

Preferably the data collector 50 is provided with means for automatic measuring point recognition, this element being labelled 53 in Figure 2. Here the data collector 50 detects the measuring point information coded at the measuring point. For example the measurement head 1 can be made such that it detects the information coded at the measuring point by means of mechanical or electrical contact; preferably the detection of the coded information however takes place wirelessly. For example the measuring point information can be coded in a RFID tag attached to a measuring point 13 (schematically labelled 18 in Figure 1), the element 53 provided in the measurement head 1 then being made for wireless readout of the measuring point information coded in the RFID tag 18. Alternatively the measuring point information can be coded in the form of a one-dimensional or two-dimensional optical pattern at the measuring point 13 which can be detected by the measurement head with a corresponding optical reading device in the manner of a bar code scanner. Furthermore the measurement head could be provided with a camera for examining the measuring point, and the measuring points can optionally be identified by means of suitable image identification software by evaluating the images recorded by the camera. This could take place alternatively or in addition to some other measuring point recognition. In particular there can be image detection software and OCR which can record and detect/read a plate with letters and numbers attached to the machine in the image of the measuring point photographed by the camera in order to identify the measuring point.

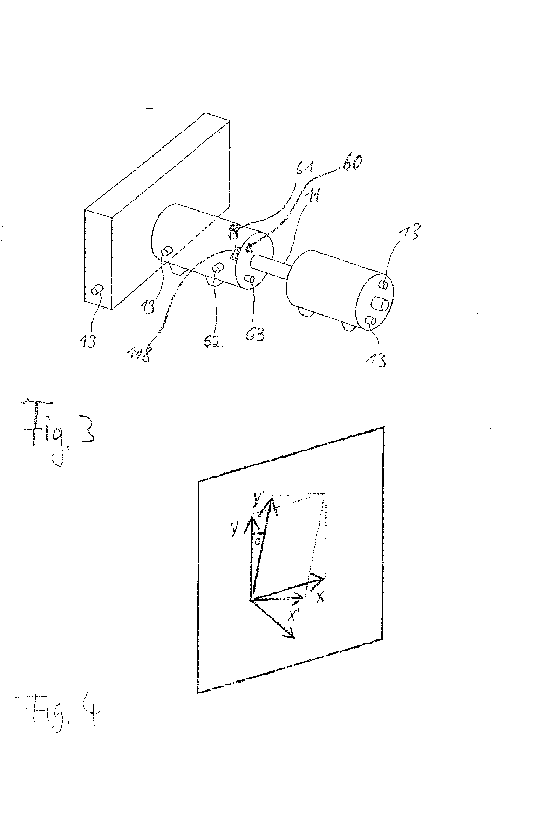

Figure 3 shows on a further example of a machine 12 how the invention can be used for measuring point recognition in groups of measuring points. In the illustrated example three individual measuring points 61, 62, 63 which differ by the intended direction of the measurement, but which are relatively close to one another in space, are combined into a measuring point group 60 which is used for example to diagnose a bearing 17. In the illustrated example the measuring point 61 is designed for a measurement in the vertical direction (i.e. in the "vertically radial" direction with respect to the horizontally aligned shaft 12), the measuring point 62 for measurement in the "horizontally radial" direction with respect to the shaft 12, and the measuring point 63 for measurement in the "horizontally axial" direction with respect to the shaft 12. To identify the measuring point group 60 a RFID tag 118 is mounted in the vicinity of the measuring points 61, 62, 63 from which the measurement head 1 by means of the element 53 can read out the information that the measurement head 1 is located in the vicinity of the measuring point group 60 and on one of the measuring points 61, 62, and 63.

In any case the measurement head 1 cannot yet ascertain solely based on the information coded in the RFID tag 18 on which of the individual measuring points 61, 62, 63 it is located. This additional information can be determined by the measurement head 1 by its determining the current three-dimensional orientation of the measurement head 1 by means of the orientation sensors 42, 43, 44, 45, as a result of which the individual measuring points 61, 62, 63 can be unequivocally distinguished based on their different measurement directions. Advantageously the gyroscopes are calibrated or "zeroed" to this direction as a reference direction by corresponding operator input by setting to a reference direction, for example along the pipe 21. Preferably this reference direction is dictated by the alignment of the first measuring point, for example in the axial direction of the shaft.

This identification of a measuring point group by means of a single common RFID tag is especially advantageous when the individual measuring points are relatively close to one another so that the ranges of the tags would overlap in the identification of each individual measuring point by means of its own tag in detection by the measurement head 1; this would then make detection of the individual measuring points by means of individually assigned RFID tags difficult. If there is only one single measuring point group (or measuring point) per machine, the measuring point group identification (or measuring point identification) then functionally corresponds to a machine identification. Furthermore, in this way an identification for individual components (for example an individual bearing) and modules (for example motor of a pump) can be implemented.

If it is established by readout of the RFID that there is a measuring point group and not only an individual measuring point, the control of the data collector must also manage the number of measuring points of the group and the pertinent orientations so that the user is then urged via the display of the data collector or an acoustic announcement to detect all measuring points and how and where the measurement head is to be oriented/positioned.

Typically the detected vibration data are evaluated by comparison with reference values which for example are filed in the data collector 50 itself or in a higher order computer to which the data collector can be connected.

According to one embodiment of the invention the measurement head 1 can be made not only as a vibration measurement head, but also as an alignment measurement head. Instead of or in addition to comparison of the vibration measurement data to reference data a comparison with filed earlier measurement data can also be undertaken.

These reference data or earlier measurement data can also be filed in a data collector at the measuring point itself. In particular a RFID tag used for measuring point identification can also be used as this data collector.

Preferably the hand-held device 30 is made such that the display 31 displays not only the measurement results, but can also display the measuring point or its location on the machine, as is described for example in EP 0 999 433 A2. For example, a picture of the measuring point taken beforehand with an external digital camera or a camera provided in the measurement head or an explanatory video sequence can be used.

Preferably the inclinometer 45 is made with three axes. But also fewer than three dimensions can be sufficient if the orientation of the measurement head is known via a sensor identification and/or induced conditions. For example, in one-dimensional measurement of a bearing with a horizontal axis, machine parts located to the right/left and in front of/behind the measuring point can stipulate that one measuring point can be probed only from overhead for radial measurements on the top of the bearing shell. Then the probe tip direction lies roughly in the direction of the force of gravity and a two-axle inclinometer 45 would have to measure whether the probe tip "meets" the vertical direction, the inclinometer 45 determining the deviation from the vertical in the x- and y-direction. For the measurements with a horizontal probe tip, as shown in Figure 1, then however the detection of the vertical with respect to the z-axis would be necessary, for which reason generally a three-axis execution of the inclinometer 45 is preferred.

The data collector 50 can further be made so that it has an arrangement (which may be implemented e g by means of the processor 46 or on the basis of the data processing provided in the hand-held device 30) for the correction of the vibration measurement data obtained by the vibration sensor 2 with respect to the current spatial orientation of the sensor measurement direction which is in deviation from a nominal orientation of the sensor measurement direction for the measurement point. The data collector learns the nominal orientation for the current measurement point for example from the measurement point information coded at the measurement point. The actual current orientation is determined by means of the orientation sensors 42, 43, 44, 45 of the measurement head 1 as described above.

Therein the data collector 50 can be made e. g. so that, if vibration data in three mutually perpendicular measurement directions x, y, z are being measured, the correction arrangement is made in order to correct the vibration measurement data obtained by the vibration sensor 2 in two of the measurement directions (e.g. x- and y-direction) with respect to a deviation $\Delta\alpha$ of the current rotation angle around the third measurement direction (e.g. z-direction) by means of a corresponding coordinate transformation.

Such a coordinate transformation is schematically indicated in Fig. 4. The "correct" components of the measurement value x and y which are corrected by the angular deviation $\alpha$ result from the "wrong" components of the measurement value x' and y' which have been actually measured by:

$$y = \sin (90°\text{-}\alpha) * y' + \sin (360°\text{-}\alpha) * x'$$

$$x = \cos (90°\text{-}\alpha) * y' + \cos (360°\text{-}\alpha) * x'$$

Thus it is sufficient if at the beginning of measurement the factors above are calculated once from the angle $\alpha$. With these factors two samples x', y' can be calculated to a "corrected sample" y, x respectively. These two multiplications and the addition can be calculated e.g. in a preprocessing step in a signal processor like the processor 46 or a FPGA, before the data per spatial direction are brought to the actual processing.

Such a correction of the vibration measurement data with respect to the actual orientation has the advantage that the measurement data at different measurement points can be compared better without the requirement that the user of the data collector 50 has to pay attention to the precise orientation of the measurement head 1.

However, it has to be considered that, if the user does not pay any attention at all e.g. to the rotation angle around the z-axis, this angle can no longer be used in the recognition of the measurement point.

**Claims**

1. Device for detecting vibrations on a machine (12) with at least one machine element (11) which rotates around one axis of rotation, with:

   one measurement head (1) for detachable coupling to at least one measuring point (13, 61, 62, 63) of the machine, with a sensor arrangement (2) for measuring vibrations in at least one sensor measurement direction which is stationary with respect to the measurement head, and an arrangement (42, 43, 44, 45) for detecting the current three-dimensional orientation of the sensor measurement direction, with at least one gyroscope (42, 43, 44), and
   an arrangement (46) for assignment of vibration measurement and the corresponding orientation of the sensor measurement direction during the respective vibration measurement.

2. Device as claimed in Claim 1, wherein the arrangement (42, 43, 44, 45) for detecting the current three-dimensional orientation of the sensor measurement direction has at least one inclinometer arrangement (45) which measures at least in one axis, the gyroscope (42, 43, 44) having one orientation measurement direction which differs from the measurement direction of the inclinometer arrangement.

3. Device as claimed in Claim 2, wherein the arrangement (42, 43, 44, 45) for detecting the current three-dimensional orientation of the sensor measurement direction has an inclinometer arrangement which measures at least in two axes, the gyroscope (42, 43, 44) having one orientation measurement direction which differs from the orientation measurement directions of the inclinometer arrangement.

4. Device as claimed in one of the preceding claims, wherein the arrangement (42, 43, 44, 45) for detecting the current three-dimensional orientation of the sensor measurement direction has three gyroscopes (42, 43, 44) with different orientation measurement directions.

5. Device as claimed in one of the preceding claims, wherein the axis of rotation of the machine is aligned horizontally and the arrangement (42, 43, 44, 45) for detecting the current three-dimensional orientation of the sensor measurement direction is made to differentiate between the following orientations of the sensor measurement direction with respect to the axis of rotation of the machine: horizontally radial, horizontally axial and vertically radial.

6. Device as claimed in one of the preceding claims, wherein at least one gyroscope (42, 43, 44) is a mechanical gyroscope, especially a MEMS gyroscope.

7. Device as claimed in one of the preceding claims, wherein the sensor arrangement (2) is made for detecting vibrations in at least two sensor measurement directions which are perpendicular to one another, the arrangement (42, 43, 44, 45) for detecting the current three-dimensional orientation of the sensor measurement direction being made to determine the three-dimensional orientation of the sensor arrangement in all three directions of space.

8. Device as claimed in one of the preceding claims, wherein the device (50) has a means (53) for automatic measuring point recognition, component recognition, module recognition and/or machine recognition.

9. Device as claimed in Claim 8, wherein the means (53) for measuring point recognition has means for detecting measuring point information coded at the measuring point (13, 61, 62, 63).

10. Device as claimed in Claim 9, wherein the measuring point (61, 62, 63) forms part of a group (60) of measuring points, the means (53) for measuring point recognition having means for detection of measuring point group information coded at the measuring point and the device being made to recognize the respective current measuring point within the group of measuring points using the detected current three-dimensional orientation of the sensor measurement direction.

11. Device as claimed in Claim 9 or 10, wherein the means (53) for measuring point recognition is made to detect the coded information wirelessly.

12. Device as claimed in Claim 11, wherein the means (53) for measuring point recognition is made to detect the coded information by means of a RFID tag (18, 118) which is provided on the measuring point (13) or group (60) of measuring points.

13. Device as claimed in Claim 11, wherein the means for measuring point recognition is made to detect the coded information by means of optical detection of a one- or two-dimensional optical pattern provided on the measuring point (13) or group (60) of measuring points.

14. Device as claimed in one of the preceding claims, wherein the measurement head (1) has means (7, 8) in order to engage an orientation-reference arrangement (21, 27, 28) provided on one of the measuring points when the measurement head is placed against the measuring point (13, 61, 62, 63) such that the measurement head comes to rest in a orientation to the measuring point which is stipulated by the orientation reference arrangement, the device (50) being made to set the gyroscope (42, 43, 44) to this orientation as the reference direction.

15. Device as claimed in one of the preceding claims, wherein the device (50) has an evaluation unit in order to compare the measurement data which have been obtained from the vibration measurement to reference values.

16. Device as claimed in Claim 15, wherein the reference data are stored in the device (50) or are received from the device via a connection to a higher order data processing device.

17. Device as claimed in one of the preceding claims, wherein the device (50) is made as a portable hand-held device (2, 3, 30).

18. Device as claimed in one of the preceding claims, wherein the measurement head is made as an alignment measurement head for determining the alignment of a machine element.

19. Device as claimed in Claim 17 or 18, wherein the device is made as a hand-held device with a single housing into which the measurement head is integrated.

20. Device as claimed in one of the preceding claims, wherein the device has a graphic display for display of information specific to the measuring points.

21. Device as claimed in Claim 8, wherein the means (53) for measuring point recognition has a camera for optical detection of the measuring point and means for image recognition in order to identify the measuring point by means of image recognition.

22. Device as claimed in one of the preceding claims, with an arrangement (46) for the correction of vibration measurement data obtained by the sensor arrangement (2) with respect to a nominal orientation of the sensor measurement direction for the measurement point (13) according to a current spatial orientation of the sensor measurement direction which is in deviation from predetermined measurement point information.

23. Device as claimed in Claim 22, wherein the sensor arrangement (2) is made in order to measure in three mutually perpendicular measurement directions and wherein the correction arrangement (46) is made in order to correct measurement data obtained by the sensor arrangement in two of the measurement directions with respect to a deviation of the current rotation angle around the third measurement direction by means of a corresponding coordinate transformation.

24. Method for detecting vibrations on a machine (12) with at least one machine element (11) which rotates around one axis of rotation, one measurement head (1) being detachably coupled to at least one measuring point (13, 61, 62, 63) of the machine,
by means of a sensor arrangement (2) of the measurement head vibrations being measured in at least one sensor measurement direction which is stationary with respect to the sensor arrangement,
the current three-dimensional orientation of the sensor measurement direction being acquired using at least one gyroscope (42, 43, 44), and
the acquired orientation of the sensor measurement direction being assigned to the vibration measurement during the respective vibration measurement.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0999433 A2
- EP 0656138 A1
- EP 0211212 A2
- EP 2320203 A1
- EP 2320204 A2
- US 7093492 B2
- DE 102007010800 A1